# EUROPÄISCHE PATENTSCHRIFT

(11) **EP 1 451 048 B1**
(45) Veröffentlichungstag und Bekanntmachung des Hinweises auf die Patenterteilung: **09.08.2006**
(21) Anmeldenummer: 02781301.3
(22) Anmeldetag: 31.10.2002
(51) Int. Cl.: B60S 1/06

(54) **VERFAHREN UND VORRICHTUNG ZUM STEUERN EINES WISCHERS EINES KRAFTFAHRZEUGS**
METHOD AND DEVICE FOR CONTROLLING THE WINDSCREEN WIPER OF A MOTOR VEHICLE
PROCEDE ET DISPOSITIF DE COMMANDE D'UN ESSUIE-GLACE D'UN VEHICULE AUTOMOBILE

(30) Priorität: 28.11.2001 DE 10158176
(43) Veröffentlichungstag der Anmeldung: 01.09.2004
(73) Patentinhaber: Volkswagen Aktiengesellschaft, 38436 Wolfsburg (DE)
(72) Erfinder: BUSSE, Carsten, 38444 Wolfsburg (DE); RAPMUNDT, Waldemar, 38162 Cremlingen (DE); FANGMEIER, Wilhelm, 38442 Wolfsburg (DE)
(74) Vertreter: Meyer, Enno
(86) Internationale Anmeldenummer: PCT/EP2002/012199
(87) Internationale Veröffentlichungsnummer: WO 2003/045744

(56) Entgegenhaltungen:
- EP-A- 1 034 991
- DE-A- 19 845 674
- GB-A- 2 311 208
- US-A- 4 614 903
- US-A- 4 663 575
- US-A- 4 866 357
- US-A- 6 111 378

## Beschreibung

Die Erfindung betrifft ein Verfahren zum Steuern eines Wischers zum Wischen einer Scheibe eines Kraftfahrzeugs, beispielsweise der Front- oder Heckscheibe, nach dem Oberbegriff von Anspruch 1.

Wischsysteme und deren Steuerung zum Entfernen von Feuchtigkeit und Nässe von der Scheibe eines Kraftfahrzeugs gehören zu der Standardausrüstung eines Kraftfahrzeugs und sind gesetzlich vorgeschrieben. Heutige Wischsysteme sind mit einer Vielzahl von Funktionen ausgerüstet, beispielsweise mit mehreren Wischgeschwindigkeiten des Wischers, üblicherweise zwei Geschwindigkeitsstufen, Intervallschaltungen, die den Wischer im Intervallbetrieb betreiben, wobei die Intervalle im allgemeinen vom Fahrer vorgegeben werden können, und Systemen, bei denen die Wischergeschwindigkeit stufenlos innerhalb vorgegebener Grenzen verstellbar ist.

Ferner sind beispielsweise aus der DE-A-197 56 504 und der DE-C-198 16 207 Wischsysteme bekannt, bei denen die Wischerfrequenz, d.h. die Wischergeschwindigkeit, in Abhängigkeit von der Geschwindigkeit des Fahrzeugs eingestellt wird. Zur Frage der Wischergeräusche äußern sich die genannten Druckschriften nicht.

Derzeit übliche Wischer werden in der Mehrzahl der Fälle von einem Rundläufer, d.h. einem Gleichstrommotor, angetrieben, dessen Rotationsbewegung über eine geeignete Mechanik in eine Hin- und Herbewegung auf der zu reinigenden Scheibe umgesetzt wird. Eine zeitliche Auflösung der Rotationsbewegung der Antriebsscheibe des Wischermotors ergibt den üblichen sinusförmigen Verlauf für die Wischergeschwindigkeit als Funktion der Zeit. Die Schnittpunkte der Sinuskurve mit der Zeitachse entsprechen dabei den Umkehrlagen des Wischers. In den Umkehrlagen ist zwar die Geschwindigkeit des Wischers Null, allerdings nicht die Beschleunigung des Wischers. Daher entsteht direkt mit dem schlagartigen Richtungswechsel des Wischers der sogenannte Peitscheneffekt sowie das damit verbundene Umlegegeräusch.

Allgemein verursachen die Wischerblätter beim Wischen einer Scheibe Wischgeräusche und in den Wendelagen Wischerblatt-Umlegegeräusche. Diese Geräusche, die von der Wischerfrequenz abhängig sind, sind insbesondere im Stand oder bei langsamer Fahrt störend.

US-A-4 614 903 zeigt ein Verfahren zum Steuern eines Wischers zum Wischen der Scheibe eines Kraftfahrzeugs, wobei der Wischer auf der Scheibe eine Bewegung zwischen zwei Umkehrlagen ausführt und der Wischer durch einen Umkehr-Wischermotor angetrieben wird, der eine elektronisch gesteuerte Richtungsumkehr des Wischerantriebs in den Umkehrlagen bewirkt.

Der Erfindung liegt daher die Aufgabe zugrunde, die vom Wischer auf der Scheibe während der Fahrt oder im Stand verursachten Geräusche zu verringern.

Die Aufgabe wird durch die Merkmale des Verfahrens zum Steuern eines Wischers nach Anspruch 1 gelöst. Bevorzugte Ausführungsformen der Erfindung sind Gegenstand der Unteransprüche.

Bei dem erfindungsgemäßen Verfahren zum Steuern eines Wischers zum Wischen der Scheibe eines Kraftfahrzeugs, wobei der Wischer auf der Scheibe eine Bewegung zwischen zwei Umkehrlagen ausführt, ist die Geschwindigkeit des Wischers in der Umkehrlage Null und ist die Beschleunigung des Wischers in der Umkehrlage im wesentlichen Null, d.h. kleiner oder gleich 6 rad/s². Vorzugsweise nimmt die Beschleunigung in der Umkehrlage den Wert Null an. Zur Unterscheidung werden im folgenden die Umkehrlagen als erste bzw. obere Umkehrlage und zweite bzw. untere Umkehrlage bezeichnet.

Dabei wird die Geschwindigkeit des Wischers beim Anfahren der oberen bzw. unteren Umkehrlage entlang vorgegebener oberer bzw. unterer Verzögerungskennlinien von einer Sollgeschwindigkeit V_{Soll} auf die Geschwindigkeit Null reduziert. Beim Ausfahren des Wischers aus der oberen bzw. unteren Umkehrlage wird vorzugsweise die Geschwindigkeit des Wischers entlang vorgegebener oberer bzw. unterer Beschleunigungskennlinien von der Geschwindigkeit Null auf Sollgeschwindigkeit V_{Soll} erhöht. Die vier zum Einsatz kommenden Kennlinien können untereinander verschieden sein und richten sich unter anderem nach der örtlichen Scheibenkrümmung und den Strömungsverhältnissen auf der Scheibe während der Fahrt. Ferner können die Kennlinien in Abhängigkeit von der Geschwindigkeit des Kraftfahrzeugs gewählt werden.

Dabei werden die Kennlinien durch Funktionen gebildet, die in dem entsprechenden Intervall, definiert durch die jeweiligen Umkehrlagen und jeweiligen Schnittpunkt der Kennlinien mit der Sollgeschwindigkeit, stetig und differenzierbar sind.

Als Funktionen für die Kennlinien können lineare, quadratische oder kubische Funktionen verwendet werden. Je nach Anforderung kann beispielsweise die obere Verzögerungskennlinie eine lineare Kennlinie sein, während die obere Beschleunigungskennlinie zum Ausfahren des Wischers beispielsweise eine quadratische Funktion sein kann. Ferner können Kennlinien auch gleich sein, d.h. es werden sowohl für die Verzögerung als auch die Beschleunigung des Wischers in die Umkehrlage hinein bzw. aus ihr heraus die gleichen Kennlinien verwendet.

Die Intervalle, in dem die Wischergeschwindigkeit von der Sollgeschwindigkeit auf die Geschwindigkeit Null bzw. von der Geschwindigkeit Null auf Sollgeschwindigkeit herab- bzw. heraufgesetzt wird, betragen maximal 30°, bezogen auf den Umdrehungswinkel der Kurbel des Antriebsmotors.

Mit der Verwendung solcher Kennlinien kann insbesondere das Geräusch des oben genannten Peitscheneffekts verringert oder verhindert werden. Zur weiteren Verringerung der Wischergeräusche wird die Wischerfrequenz als eine Funktion der Geschwindigkeit des Kraftfahrzeugs gewählt, wobei die Wischerfrequenz des Wischers mit steigender Kraftfahrzeuggeschwindigkeit zunimmt.

Die Frequenz des Wischers kann dabei einerseits in diskreten Stufen verändert werden oder die Veränderung der Frequenz erfolgt kontinuierlich. In beiden Fällen ist eine untere und eine obere Frequenz für den Wischer festgelegt. Ferner kann die Veränderung der Frequenz des Wischers eine Funktion der Wischerstufe sein, d.h. in einer ersten Wischerstufe eines Wischers mit mehreren Stufen ist das Intervall, in dem die Wischerfrequenz verändert wird, ein anderes als in der zweiten Wischerstufe, wobei mit höherer Wischerstufe die Wischerfrequenzen höher sind als in der niedrigeren Wischerstufe. Dabei können die Wischerfrequenzintervalle sich überschneiden oder disjunkt sein.

Eine bevorzugte Ausführungsform der Erfindung wird nachfolgend anhand der Zeichnungen erläutert. In den Figuren zeigt
- Fig.1: die Wischergeschwindigkeit als Funktion des Drehwinkels eines herkömmlichen Rundläufers,
- Fig. 2: das Verhalten der Wischergeschwindigkeit als Funktion des Drehwinkels gemäß dem erfindungsgemäße Verfahren, und
- Fig. 3: die Abhängigkeit der Wischerfrequenz von der Geschwindigkeit des Kraftfahrzeugs.

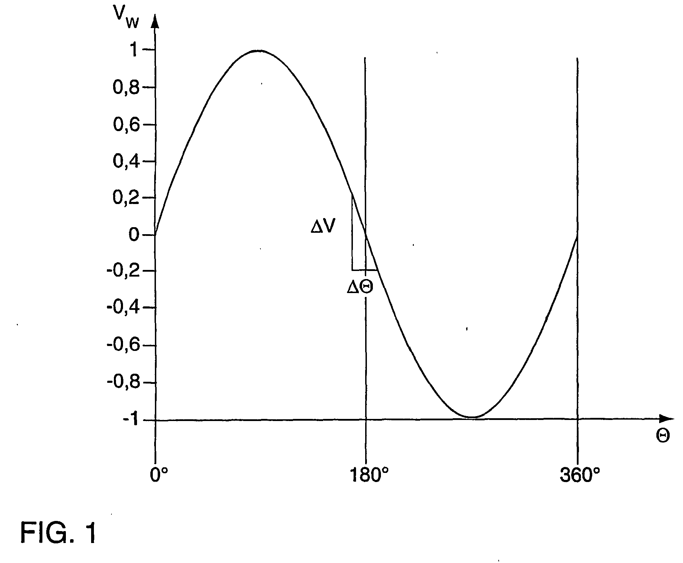

Figur 1 zeigt die normierte Wischergeschwindigkeit als Funktion des Drehwinkels θ eines herkömmlichen Rundläufermotors. In den Positionen 0°, 180° und 360° (= 0°) befinden sich die Umkehrlagen des Wischers, wobei 0° bzw. 360° die untere Umkehrlage und 180° die obere Umkehrlage in diesem Beispiel bedeutet. Die Beschleunigung des Wischers in der oberen Umkehrlage bei 180° ist dabei in Fig. 1 eingezeichnet und beträgt näherungsweise a = ΔV/Δθ. Wie aus der Fig. 1 hervorgeht, ist die Beschleunigung in den oberen und unteren Umkehrlagen ungleich Null, was den bekannten Peitscheneffekt eines Wischerarms in den beiden Umkehrlagen bewirkt.

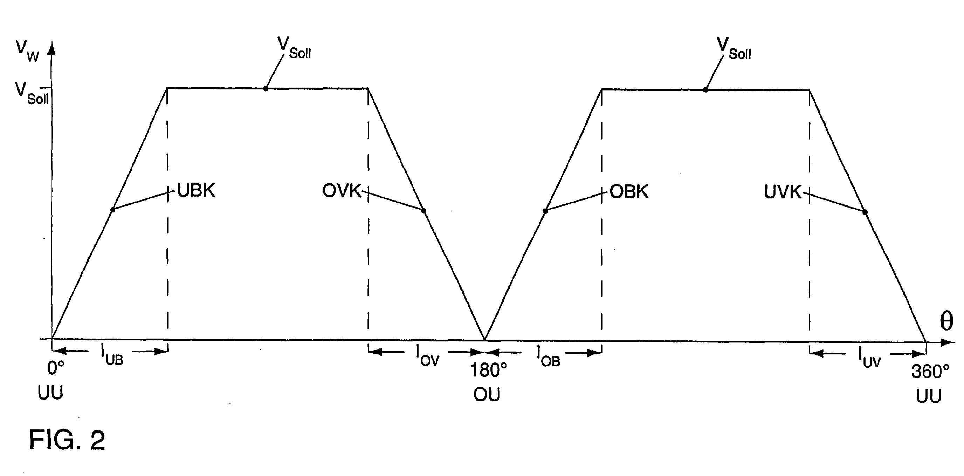

Fig. 2 zeigt eine schematische Darstellung einer bevorzugten Ausführungsform des erfindungsgemäßen Verfahrens. Dabei kommt ein Umkehr-Wischermotor zum Einsatz, der alle 180° eine elektronisch gesteuerte Richtungsumkehr des Wischerantriebs bewirkt. Dargestellt ist die Wischergeschwindigkeit V_{w} als Funktion des Drehwinkels θ des Wischerantriebs von 0° bis 360°. Die Umkehrlagen sind durch die Winkel 0°, 180° und 360° gegeben, wobei die Winkel 0° und 360° die untere Umkehrlage UU und der Winkel 180° die obere Umkehrlage OU wiedergibt. In dem hier dargestellten Ausführungsbeispiel wird der Wischer aus der unteren Umkehrlage UU auf einer unteren Beschleunigungskennlinie UBK, die im dargestellten Fall einer linearen Rampe entspricht, auf eine Sollgeschwindigkeit V_{Soll} beschleunigt. Das untere Beschleunigungsintervall I_{UB} entspricht dabei einem Winkelbereich von maximal 30°, wobei die Darstellung in Fig. 2 nicht maßstabsgetreu ist. Die Sollgeschwindigkeit V_{Soll} wird dann während des Wischens der Scheibe konstant gehalten. Mit dem Annähern an die obere Umkehrlage OU wird die Geschwindigkeit des Wischers entlang einer oberen Verzögerungskennlinie OVK herabgesetzt, so daß die Wischergeschwindigkeit in der oberen Umkehrlage OU Null ist, wobei die Beschleunigung in der oberen Umkehrlage OU ebenfalls im wesentlichen Null bzw. Null beträgt. Das Intervall I_{OV} zum Verzögern der Wischergeschwindigkeit beträgt auch hier maximal 30°. Auch hier wird die obere Verzögerungskennlinie K2 durch eine lineare Rampe gebildet. Aus der oberen Umkehrlage OU wird der Wischer entlang einer oberen Beschleunigungskennlinie OBK innerhalb eines Intervalls I_{OB} wieder auf Sollgeschwindigkeit V_{Soll} beschleunigt, die beibehalten wird, bis der Wischer sich wieder der unteren Umkehrlage UU annähert. Entlang einer unteren Verzögerungskennlinie UVK wird die Geschwindigkeit des Wischers innerhalb eines Intervalls I_{UV} wieder vermindert, bis der Wischer in der unteren Umkehrlage wieder die Geschwindigkeit und Beschleunigung Null aufweist. Wie bereits erwähnt, umfassen alle Intervalle einen maximalen Bereich von 30°.

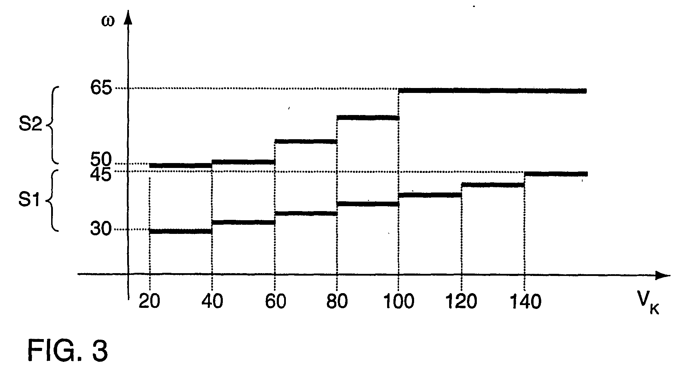

Fig. 3 zeigt die Veränderung der Wischerfrequenz ω in Wischzyklen pro Minute als Funktion der Geschwindigkeit V_{K} in km/h des Kraftfahrzeugs. Dabei wird die Wischerfrequenz in diskreten Schritten verändert, wobei die Wischerfrequenz weiterhin eine Funktion der Wischerstufe ist. Ein Wischzyklus ist dabei definiert als die Bewegung des Wischers von einem Ausgangszustand, beispielsweise untere Umkehrlage, bis zum Wiedererreichen des Ausgangspunkts, d.h. der unteren Umkehrlage, und entspricht einem Winkelbereich von 360°.

Im dargestellten Beispiel weist der Wischer zwei Stufen S1 und S2 auf, wobei in der ersten Stufe S1 die Wischerfrequenz im Intervall von 30 bis 45 Wischzyklen pro Minute in insgesamt 7 Schritten verändert wird. Dabei sind die Frequenzsprünge zwischen den Schritten innerhalb des Frequenzintervalls der ersten Wischerstufe S1 in diesem Beispiel im wesentlichen äquidistant.

In der zweiten Wischerstufe S2, die im Beispiel ein Intervall von 50 bis 65 Wischerzyklen pro Minute abdeckt, wird die Wischerfrequenz als Funktion der Kraftfahrzeuggeschwindigkeit in 5 Schritten verändert, wobei der Abstand zwischen den Schritten in der zweiten Wischerstufe S2 nicht äquidistant ist. Ab einer Kraftfahrzeuggeschwindigkeit von 140 km/h befindet sich der Wischer in jeder Stufe S1 oder S2 im höchsten Frequenzschritt.

Ob die Schritte in den jeweiligen Wischerstufen äquidistant gewählt werden oder nicht, hängt von der Anwendung ab. Ferner können sich die Frequenzbereiche überlappen oder disjunkt sein.

Anstelle der diskreten Frequenzschritte in dem angeführten Beispiel nach Fig. 3 können auch in den jeweiligen Wischerstufen S1 bzw. S2 kontinuierliche Kennlinien verwendet werden, die die jeweiligen Frequenzbereiche überdecken.

Durch die Abhängigkeit der Wischerfrequenz von der Geschwindigkeit des Kraftfahrzeugs ist es möglich, die für den Fahrer wahmehmbaren Reibgeräusche des Wischers auf der Scheibe weiter zu verringern.

### BEZUGSZEICHENLISTE

- V_{W}: Wschgeschwindigkeit
- V_{Soll}: Soll-Geschwindigkeit
- V_{K}: Kraftfahrzeuggeschwindigkeit
- UU: untere Umkehrlage
- OU: obere Umkehrlage
- UBK: untere Beschleunigungskennlinie
- OVK: obere Verzögerungskennlinie
- OBK: obere Beschleunigungskennlinie
- UVK: untere Verzögerungskennlinie
- IUB: unteres Beschleunigungsintervall
- IOV: oberes Verzögerungsintervall
- IOB: oberes Beschleunigungsintervall
- IUV: unteres Verzögerungsintervall
- a: Beschleunigung
- ω: Wischerfrequenz
- θ: Drehwinkel

## Patentansprüche

1. Verfahren zum Steuern eines Wischers zum Wischen der Scheibe eines Kraftfahrzeugs, wobei der Wischer auf der Scheibe eine Bewegung zwischen zwei Umkehriagen ausführt und der Wischer durch einen Umkehr-Wischermotor angetrieben wird, der eine elektronisch gesteuerte Richtungsumkehr des Wischerantriebs in den Umkehrlagen bewirkt, wobei die Geschwindigkeit des Wischers in der Umkehrlage Null und die Beschleunigung des Wischers in der Umkehrlage kleiner oder gleich 6 rad/s² sind,und wobei die Geschwindigkeit des Wischers beim Anfahren der oberen bzw. unteren Umkehrlage entlang einer vorgegebenen oberen bzw. unteren Verzögerungskennlinie (OVK, UVK) von einer Sollgeschwindigkeit (V_{Soll}) auf die Geschwindigkeit Null reduziert wird.
**dadurch gekennzeichnet,**
**dass** die oberen und unteren Verzögerungskennlinien (OVK, UVK) durch Funktionen gebildet werden, die auf den Intervallen, die durch die Umkehrlagen und den jeweiligen Schnittpunkt der Kennlinien mit der Sollgeschwindigkeit gebildet werden, stetig und differenzierbar sind, und
**dass** die Wischerfrequenz (ω) eine Funktion der Geschwindigkeit (V_{K}) des Kraftfahrzeugs ist, wobei die Wischerfrequenz mit steigender Kraftfahrzeuggeschwindigkeit zunimmt.

2. Verfahren nach Anspruch 1, **dadurch gekennzeichnet, daß** die Beschleunigung in den Umkehrlagen gleich Null ist.

3. Verfahren nach einem der vorangegangenen Ansprüche, **dadurch gekennzeichnet, daß** die Geschwindigkeit des Wischers beim Ausfahren des Wischers aus der oberen bzw. unteren Umkehrlage entlang einer vorgegebenen oberen bzw. unteren Beschleunigungskennlinie von der Geschwindigkeit Null auf Sollgeschwindigkeit (V_{Soll}) erhöht wird.

4. Verfahren nach einem der Ansprüche 2 oder 3, **dadurch gekennzeichnet, daß** und die oberen und unteren Beschleunigungskennlinien (OBK, UBK) durch Funktionen gebildet werden, die auf den Intervallen, die durch die Umkehrlagen und den jeweiligen Schnittpunkt der Kennlinien mit der Sollgeschwindigkeit gebildet werden, stetig und differenzierbar sind.

5. Verfahren nach Anspruch 4, **dadurch gekennzeichnet, daß** die obere Verzögerungskonnlinie (OVK), die untere Verzögerungskonnlinie (UVK), die obere Beschleunigungskennlinie (OBK) und die untere Beschleunigungskennlinie (UBK) durch lineare, quadratische oder kubische Funktionen gebildet werden.

6. Verfahren nach einem der vorangegangenen Ansprüche, **dadurch gekennzeichnet, daß** die Wischerfrequenz des Wischers in diskreten Stufen verändert wird.

7. Verfahren nach einem der vorangegangenen Ansprüche, **dadurch gekennzeichnet, daß** die Wischerfrequenz des Wischers kontinuierlich geändert wird.

8. Verfahren nach einem der vorangegangenen Ansprüche, **dadurch gekennzeichnet, daß** die Wischerfrequenz eine Funktion der Wischerstufe (S1, S2) ist.

## Claims

1. Method for controlling a wiper for wiping a glass pane of a motor vehicle, with the wiper executing a movement between two reversal positions on the glass pane and being driven by a reversal wiper motor which reverses the direction of the wiper drive in the reversal positions in an electronically controlled manner, with the speed of the wiper in the reversal position being zero and the acceleration of the wiper in the reversal position being less than or equal to 6 rad/sec², and with the speed of the wiper being reduced from a setpoint speed (Vₛₑₜ) to the speed zero when approaching the upper or lower reversal position along a predefined upper or lower deceleration characteristic curve (OVK, UVK),
**characterized**
**in that** the upper and lower deceleration characteristic curves (OVK, UVK) are formed by functions which are continuous and can be differentiated at the intervals which are formed by the reversal positions and the respective point of intersection between the characteristic curves and the setpoint speed, and
**in that** the wiper frequency (ω) is a function of the speed (V_{K}) of the motor vehicle, with the wiper frequency increasing as the motor-vehicle speed increases.

2. Method according to Claim 1, **characterized in that** the acceleration in the reversal positions is equal to zero.

3. Method according to either of the preceding claims, **characterized in that** the speed of the wiper is increased from the speed zero to the setpoint speed (Vₛₑₜ) when the wiper moves out of the upper or lower reversal position along a predefined upper or lower acceleration characteristic curve.

4. Method according to either of Claims 2 and 3, **characterized in that** the upper and lower acceleration characteristic curves (OBK, UBK) are formed by functions which are continuous and can be differentiated at the intervals which are formed by the reversal positions and the respective point of intersection between the characteristic curves and the setpoint speed.

5. Method according to Claim 4, **characterized in that** the upper deceleration characteristic curve (OVK), the lower deceleration characteristic curve (UVK), the upper acceleration characteristic curve (OBK) and the lower acceleration characteristic curve (UBK) are formed by linear, quadratic or cubic functions.

6. Method according to one of the preceding claims, **characterized in that** the wiper frequency of the wiper is varied in discrete steps.

7. Method according to one of the preceding claims, **characterized in that** the wiper frequency of the wiper is varied continuously.

8. Method according to one of the preceding claims, **characterized in that** the wiper frequency is a function of the wiper level (S1, S2).

## Revendications

1. Procédé de commande d'un essuie-glace pour essuyer le pare-brise d'un véhicule automobile, l'essuie-glace accomplissant sur le pare-brise un mouvement entre deux positions d'inversion de sens et l'essuie-glace étant entraîné par un moteur d'essuie-glace réversible qui produit une inversion de sens par commande électronique du mécanisme d'entraînement de l'essuie-glace dans les positions d'inversion de sens, la vitesse de l'essuie-glace en position d'inversion de sens étant nulle et l'accélération de l'essuie-glace en position d'inversion de sens étant inférieure ou égale à 6 rad/s², et la vitesse de l'essuie-glace lors de l'approche de la position d'inversion de sens supérieure ou inférieure étant réduite le long d'une courbe de ralentissement supérieure ou inférieure prédéfinie (OVK, UVK) entre une vitesse de consigne (V_{Soll}) et la vitesse nulle, **caractérisé en ce que** les courbes de ralentissement supérieure et inférieure (OVK, UVK) sont calculées par des fonctions qui sont continues et différentiables sur les intervalles formés par les positions d'inversion de sens et les points d'intersection correspondants des courbes caractéristiques avec la vitesse de consigne et que la cadence de l'essuie-glace (ω) est une fonction de la vitesse (V_{K}) du véhicule automobile, la cadence de l'essuie-glace augmentant à mesure que la vitesse du véhicule automobile croît.

2. Procédé selon la revendication 1, **caractérisé en ce que** l'accélération aux positions d'inversion de sens est égale à zéro.

3. Procédé selon l'une des revendications précédentes, **caractérisé en ce que** la vitesse de l'essuie-glace, lorsque l'essuie-glace s'éloigne de la position d'inversion de sens supérieure ou inférieure, est augmentée de la vitesse nulle à une vitesse de consigne (Vₛₒₗₗ) le long d'une courbe d'accélération supérieure ou inférieure.

4. Procédé selon l'une des revendications 2 ou 3, **caractérisé en ce que** les courbes d'accélération supérieure et inférieure (OBK, UBK) sont calculées par des fonctions qui sont continues et différentiables sur les intervalles formés par les positions d'inversion de sens et les points d'intersection correspondants des courbes caractéristiques avec la vitesse de consigne.

5. Procédé selon la revendication 4, **caractérisé en ce que** la courbe de ralentissement supérieure (OVK), la courbe de ralentissement inférieure (UVK), la courbe d'accélération supérieure (OBK) et la courbe d'accélération inférieure (UBK) sont calculées par des fonctions linéaires, quadratiques ou cubiques.

6. Procédé selon l'une des revendications précédentes, **caractérisé en ce que** la cadence de l'essuie-glace est modifiée en paliers discrets.

7. Procédé selon l'une des revendications précédentes, **caractérisé en ce que** la cadence de l'essuie-glace est modifiée de manière continue.

8. Procédé selon l'une des revendications précédentes, **caractérisé en ce que** la cadence de l'essuie-glace est une fonction du palier de l'essuie-glace (S1, S2).
